# EUROPEAN PATENT APPLICATION

(11) **EP 2 489 456 A2**
(43) Date of publication of application: **22.08.2012**
(21) Application number: 12156062.7
(22) Date of filing: 17.02.2012
(51) Int. Cl.: B23H 7/34, B23H 5/12

(54) **Electroerosion machining systems and methods**

(30) Priority: 21.02.2011 CN 201110041940
(71) Applicant: General Electric Company, Schenectady, NY 12345 (US)
(72) Inventor: Trimmer, Andrew Lee, Niskayuna, NY New York 12309 (US); Luo, Yuanfeng, Schenectady, NY New York 12309 (US); Wei, Bin, Schenectady, NY New York 12309 (US); Cintula, Mark James, Schenectady, NY New York 12309 (US)
(74) Representative: Williams, Andrew Richard

(57) **Abstract**

An electroerosion machining system (10) comprises one or more electrodes configured to machine a workpiece (100), a power supply (13) configured to energize the workpiece (100) and the respective one or more electrodes (15), an electrolyte supply (14) configured to pass an electrolyte, and a working apparatus configured to move the respective one or more electrodes relative to the workpiece. The electroerosion machining system further comprises a controller (12) configured to control the working apparatus to machine the workpiece, and a removal agent (19) configured to cooperate with the electrolyte from the electrolyte supply for removal of removed material from the workpiece. An electroerosion machining method is also presented.

## Description

### BACKGROUND

This invention relates generally to electroerosion machining systems and methods. More particularly, this invention relates to electroerosion machining systems and methods with higher flushing capabilities for machining workpieces.

Electrochemical machining (ECM) and electrical discharge machining (EDM) are conventional processes for machining material in objects such as gas turbine components. ECM processes typically pass an electrical current in the gap between an electrode(s) and a workpiece for precision removal of amounts of material on the workpiece to achieve a desired final configuration thereof with substantially smooth surfaces. EDM processes circulate a dielectric liquid between an electrode(s) and a workpiece, and electrical discharges are generated in the gap between the electrode and the workpiece.

Both ECM and EDM processes use electrical current under direct-current (DC) voltage to electrically power removal of the material from the workpiece. However, in ECM, an electrolyte (an electrically conductive liquid) is circulated between the electrode(s) and the workpiece for permitting electrochemical dissolution of the workpiece material, as well as cooling and flushing the gap region therebetween. In contrast, EDM processes circulate a nonconductive (dielectric) liquid in the gap to permit electrical discharges in the gap to remove the workpiece material. As used herein, the term "electroerosion" should be understood to apply to those electromachining processes that circulate an electrolyte (electrically conductive liquid) in the gap between the electrode(s) and the workpiece, these processes enabling a high rate of material removal and reducing thermal damages to the workpiece.

Electroerosion machining is generally a thermal based material removal process. During machining, removed material (chips) from the workpiece may be typically in a molten/liquid phase and it is important to eject the molten chips effectively from cutting zones. However, in some applications, during conventional electroerosion machining, due to insufficient flushing capabilities, the molten chips may interact with the workpiece being machined so as to stick or attach to the workpiece and transfer excess thermal energy into the workpiece resulting in heat affected zone on the workpiece and undesirable material properties. This may be disadvantageous for subsequent electroerosion machining and the machining quality of the workpiece.

Therefore, there is a need for new and improved electroerosion machining systems and methods with higher flushing capabilities for machining workpieces.

### BRIEF DESCRIPTION

An electroerosion machining system is provided in accordance with one embodiment of the invention. The electroerosion machining system comprises one or more electrodes configured to machine a workpiece, a power supply configured to energize the workpiece and the respective one or more electrodes, an electrolyte supply configured to pass an electrolyte between the workpiece and the respective one or more electrodes, and a working apparatus configured to move the respective one or more electrodes relative to the workpiece. The electroerosion machining system further comprises a controller configured to control the working apparatus to machine the workpiece, and a removal agent configured to cooperate with the electrolyte from the electrolyte supply for removal of removed material from the workpiece.

An electroerosion machining method is provided in accordance with another embodiment of the invention. The electroerosion machining method comprises driving one or more electrodes to move relative to a workpiece, passing an electric current between the respective one or more electrodes and the workpiece while passing an electrolyte from an electrolyte supply through a gap defined therebetween, and introducing a removal agent between the respective one or more electrodes and the workpiece to cooperate with the electrolyte for removal of removed material from the workpiece out of the gap.

### BRIEF DESCRIPTION OF THE DRAWINGS

The above and other aspects, features, and advantages of the present disclosure will become more apparent in light of the following detailed description when taken in conjunction with the accompanying drawings in which:
FIG. 1 is a schematic diagram of an electroerosion machining system in accordance with one embodiment of the invention;
FIGS. 2-3 are schematic diagrams showing surface comparison of a workpiece machined with and without a removal agent; and
FIGS. 4-5 are schematic diagrams of the electroerosion machining system in accordance with another two embodiments of the invention.

### DETAILED DESCRIPTION OF THE DISCLOSURE

Preferred embodiments of the present disclosure will be described hereinbelow with reference to the accompanying drawings. In the following description, well-known functions or constructions are not described in detail to avoid obscuring the disclosure in unnecessary detail.

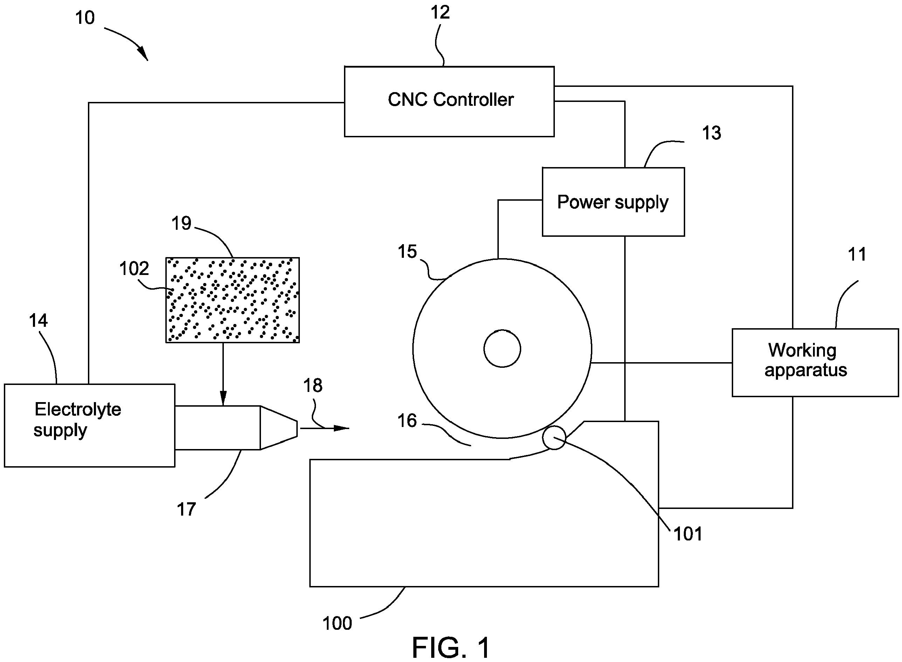

FIG. 1 illustrates a schematic diagram of an electroerosion machining system 10 in accordance with one embodiment of the invention. In embodiment of the invention, the electroerosion machining system 10 is used to remove material from a workpiece 100, such as titanium alloy layer by layer to form a desired configuration. As illustrated in FIG. 1, the electroerosion machining system 1 comprises a numerical control (NC) or computer numerical control (CNC) device (not shown) including a working apparatus 11 and a controller 12, a power supply 13, an electrolyte supply 14, and an electrode 15. In one non-limiting example, the electroerosion machining system 1 comprises a high speed electroerosion (HSEE) machining system.

In embodiments of the invention, the NC or the CNC device can be used to perform traditional automated machining. In particular examples, the working apparatus 11 may comprise a machine tool or lathe including servomotors (not shown) and spindle motors (not shown). The electrode 15 is mounted on the working apparatus 11 for performing electroerosion machining. Accordingly, the servomotors may drive the electrode 15 and the workpiece 100 to move relative to each other at a desired speed and path, and the spindle motors drive the electrode 15 to rotate at a desired speed.

The controller 12 comprises pre-programmed instructions based on descriptions of the workpiece 100 in a computer-aided design (CAD) and/or a computer-aided manufacturing (CAM), and is connected to the working apparatus 11 to control the working apparatus 11 to drive the electrode 15 to move and/or rotate according to certain operational parameters, such as certain feedrates, axes positions, or spindle speeds etc. Additionally, the controller 12 is also connected to the power supply 13 to monitor the status of voltages and/or currents in a gap 16 between the electrode 15 and the workpiece 100 so as to control the movement of the working apparatus 11 holding the electrode 15.

In non-limiting examples, the controller 12 may be a general controller and comprise central processing units (CPU), read only memories (ROM), and/or random access memories (RAM), as known to one skilled in the art. In one non-limiting example, the controller 12 comprises a controller, sold under the tradename GE-FANUC 18i CNC, by GE-Fanuc, of Charlottesville, Virginia.

In the illustrated embodiment, the power supply 13 comprises a direct current (DC) pulse generator. The electrode 15 and the workpiece 100 are connected to negative and positive poles of the power supply 13, respectively. Accordingly, in embodiments of the invention, the electrode 15 may function as a cathode and the workpiece 100 may act as an anode. In other embodiments, the polarities on the electrode 15 and the workpiece 100 may be reversed. In certain applications, the power supply 13 may not be connected to the controller 12.

In one example, the electrolyte supply 14 may be in communication with and receive the pre-programmed instructions from the controller 12 for passing an electrolyte between the electrode 15 and the workpiece 100. Alternatively, the electrolyte supply 14 may be disposed separately. In the illustrated embodiment, a nozzle 17 is employed to be in fluid communication with the electrolyte supply 14 for projecting the electrolyte to pass between the electrode 15 and the workpiece 100. In other examples, more than one nozzle may be employed for projection of the electrolyte from the electrolyte supply 14.

Thus, during electroerosion machining, the power supply 13 may pass a pulse electric current between the electrode 15 and the workpiece 100 to remove material from the workpiece 100 layer by layer for forming a desired configuration while the electrolyte passes between the electrode 15 and the workpiece 100 to carry the removed material (chips) 101 out of the gap 16. In the illustrated embodiment, the electrode 15 comprises a wheel shape. An arrow 18 indicates a flow direction of the electrolyte. In some applications, the electrode 15 may have other shapes, such as rectangular shapes or shapes having tubular cross-sections.

In certain applications, during electroerosion machining, the removed material may not be carried out of the gap 16 effectively. As a result, at least a portion of the removed material may stick to a surface of the workpiece to be machined and transfer excess thermal energy into the workpiece resulting in heat affected zone (HAZ) on the workpiece and undesirable material properties. For example, during electroerosion machining of Ti-alloy, when Ti-alloy is heated and rapidly quenched by the electrolyte, alpha/beta Ti in Ti-alloy may have a phase transition to change into brittle alpha, which is disadvantageous to effectiveness of such a thermal based material removal process.

Accordingly, in order to avoid and/or alleviate generation of undesirable material properties and the heat affected zone on the workpiece, in some embodiments, as illustrated in FIG. 1, the electroerosion machining system 10 may further comprise a removal agent 19 to cooperate with the electrolyte supply 14 for facilitating removal of the removed material out of the gap 16. In non-limiting examples, a removal agent supply 102 may be employed to supply the removal agent 19.

In some examples, the removal agent 19 may comprise one or more of copper powder, non-conducting materials, nitrogen containing hydrocarbons, and other suitable materials. In non-limiting examples, the non-conducting materials may comprise aluminum oxide, carbides, nitrides, resins, diamond, and garnet. The nitrogen containing hydrocarbons may comprise amines. The carbides may comprise silicon carbide, tungsten carbide and boron carbide. The nitrides may comprise cubic boron nitride (CBN). The resins may comprise phenolic and polyimide. In some application, the removal agent 19 may be in a form of particles, and the size distribution of the particles may be determined based on different applications.

In the illustrated embodiment, the removal agent 19 is in fluid communication with the nozzle 17 of the electrolyte supply 14. Thus, during electroerosion machining, the removal agent 19 may be mixed and dispersed into the electrolyte for passing between the electrode 15 and the workpiece 100 to facilitate removal of the removed material out of the gap 16. In some non-limiting examples, the removal agent 19 may function as additives to be dispersed in the electrolyte in a form of separated solid particles.

In certain applications, the removal agent 19 may comprise more than one of the copper powder, non-conducting materials, nitrogen containing hydrocarbons, carbides, nitrides, resins, diamond, and other suitable materials. In one non-limiting example, the removal agent 19 may comprise a mixture of the non-conducting materials, such as aluminum oxide and the nitrogen containing hydrocarbons, such as amines. In this example, during electroerosion machining, with the introduction of the removal agent 19 between the electrode and the workpiece, the discharge from the power supply 13 may change into transient electric arc between the electrode 15 and the workpiece 100 due to the presence of the non-conducting materials, such as aluminum oxide, so that the thermal impact to the workpiece may be alleviated and lower electrical energy may also be consumed.

Further, during ejection of the removal agent 19 and the electrolyte from the nozzle 17, aluminum oxide cooperates with the electrolyte to generate relatively higher momentum to remove the removed material from the surface of the workpiece 100 to be machined. Meanwhile, the nitrogen containing hydrocarbons, such as amines may also change chemical composition of the molten chips 101 in molten zones/cutting zones (not labeled) so that the surface tension of the molten chips may be changed accordingly so as to reduce affinity of the molten chips on the workpiece. As a result, with the cooperation of the removal agent 19 and the electrolyte during the electroerosion machining, the molten chips may be removed effectively out of the gap 16 and the heat affected zones on the workpiece 100 may be avoided and/or alleviated.

Table-1 illustrates comparison of results of three exemplary experiments for machining the workpiece, such as Ti-alloy. Experimental conditions in each of the three exemplary experiments comprise a voltage of about 15 volts between the electrode and the workpiece, and a depth of cut (DOC) of about 0.02 inch each cut. As can be seen, in the first exemplary experiment without employment of the removal agent 19, the heat affected zone is about 674um and the consumed electrical energy is about 30700J. In the second exemplary experiment with employment of phenolic, the heat affected zone is about 383um and the consumed electrical energy is about 6150J. In the third exemplary experiment with employment of polyimide, the heat affected zone is about 238um and the consumed electrical energy is about 5810J.

**Table-1**

| Voltage | HAZ | Removal agent | DOC | Consumed energy |
|---|---|---|---|---|
| 15v | 647um | -- | 0.02inch | 30700J |
| 15v | 383um | phenolic | 0.02inch | 6150J |
| 15v | 238um | polyimide | 0.02inch | 5810J |

As illustrated in Table-1, compared with the exemplary experiment without employment of the removal agent 19, in the exemplary experiments with employment of the removal agent 19, the heat affected zones and the consumed energy are both smaller, so that machining efficiency and quality may be enhanced.

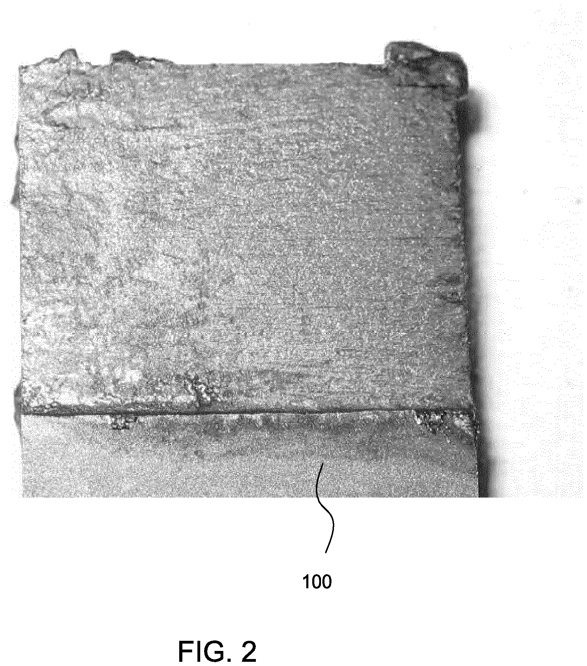

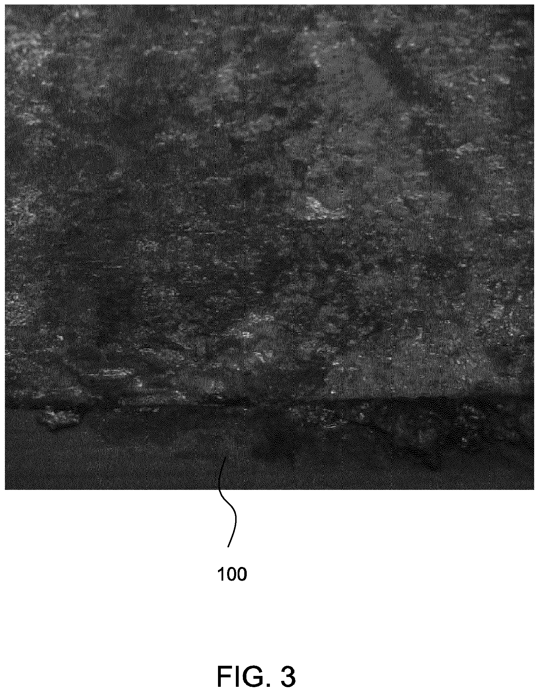

FIGS. 2-3 illustrate schematic diagrams showing surface comparison of a workpiece, such as Ti-alloy machined with and without the removal agent 19, respectively. In the experiment shown in FIG. 2, the removal agent 19 comprises garnet. As compared, the machined surface of the workpiece 100 in the experiment with the garnet is smooth and has less thermal impact than the machined surface of the workpiece 100 in the experiment without the garnet, as shown in FIG. 3.

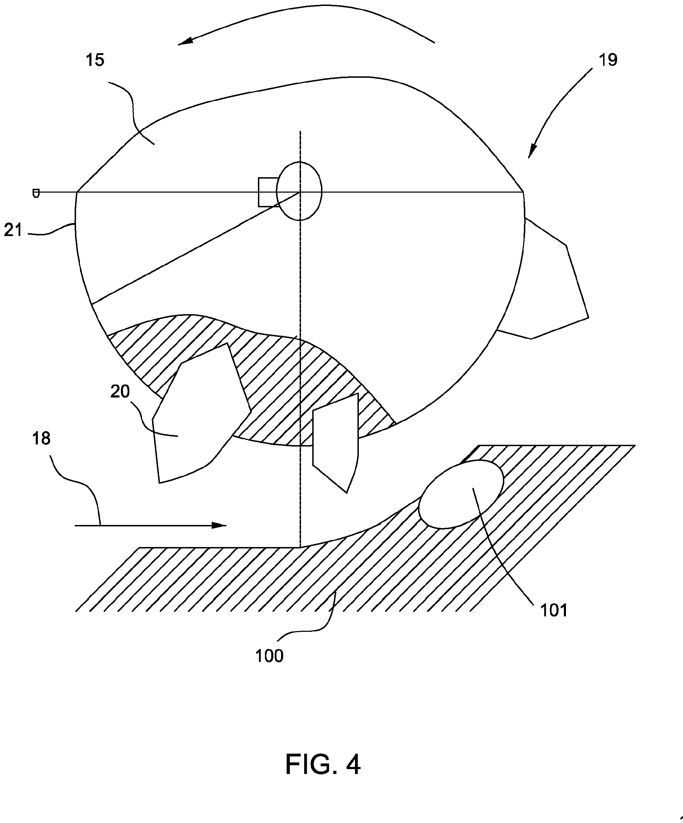

FIG. 4 illustrates a schematic diagram of the electroerosion machining system 10 in accordance with another embodiment of the invention. For easy illustration, the removal agent 19, the electrolyte (not labeled), the electrode 15 and the workpiece 100 are illustrated and other elements are not illustrated. As illustrated in FIG. 4, the electrode 15 has the wheel shape. The removal agent 19 comprises a plurality of abrasive elements 20 disposed separately around and integrated with the electrode. In non-limiting examples, the abrasive elements may be sintered together with the electrode 15. In some applications, the abrasive elements 20 of the removal agent 19 may be nonconductive and have desired hardness. In non-limiting examples, the abrasive elements 20 may comprise nonconductive materials, such as aluminum oxide and tungsten carbide.

For the illustrated arrangement, the abrasive elements 20 may protrude beyond an outer surface 21 of the electrode 15 and be spaced away from each other. The electrode 15 may be segmented into a plurality of spaced discharge sections (not labeled) by the abrasive elements 20. The discharge sections and the abrasive elements 20 may be disposed alternately for performing the electroerosion machining.

As depicted in FIG. 4, during electroerosion machining, the power supply 13 passes the pulse electric current between the electrode 15 and the workpiece 100. The discharge sections of the electrode 15 and the abrasive elements 20 may be disposed alternately, so that after discharge of the discharge zones, the discharge may be paused and the adjacent abrasive elements 20 are introduced to pass the respective cutting zones for removal of the molten chips 101 in cooperation with the electrolyte.

Accordingly, with the electrolyte passing between the electrode 15 and the workpiece 100 to carry the molten chips 101 out of the gap 16, the protruding abrasive elements 20 may wipe alternately to detach the removed material from the workpiece to facilitate removal of the removed material out of the gap 16 to alleviate the thermal impact on the workpiece 100. In certain applications, during machining, the abrasive elements 20 may be attrited.

In certain applications, in order to alleviate the thermal impact on the workpiece, more than one electrode may also be employed and be located separately and alternately. Thus, similar to the arrangement in FIG. 4, the discharge of the electrodes may also be performed alternately to alleviate thermal impact on the workpiece.

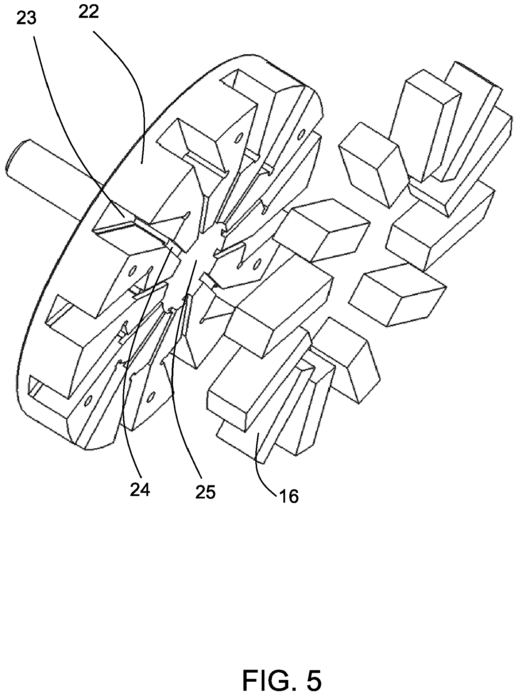

FIG. 5 illustrates a schematic diagram of the electroerosion machining system 10 employing a plurality of electrodes 16. Similar to the arrangement in FIG. 4, for easy illustration, some elements are not illustrated in FIG. 5. As illustrated in FIG. 5, the electroerosion machining 10 comprises a base 22 for holding the electrodes 16 and being assembled onto the working apparatus 11. For the illustrated arrangement, the base 22 comprises a wheel shape and defines a plurality of slots 23 and a plurality of channels 24 in fluid communication with the slots 23 and a central hole 25.

In some examples, the slots 23 may be defined separately along a circumference of the base 22 for accommodation of the respective electrodes 16. The channels 24 may be used for the electrolyte passing through. The central hole 25 may be in fluid communication with the electrolyte supply 14. During electroerosion machining, with the rotation of the base 20, the discharge between the workpiece 100 and the respective electrodes 16 may also be performed alternately so as to alleviate the thermal impact on the workpiece 100 while the electrolyte passes between the base 22 and the workpiece 100 to remove the molten chips.

It should be noted that the arrangements in FIGS. 1-5 are merely illustrative. In some applications, for the arrangement in FIG. 5, during machining, similar to the arrangement in FIG. 1, the removal agent 19 may also be mixed into the electrolyte for facilitation of removal of the removed material. Although the electrodes 16 comprise rectangular shapes, the electrodes 16 may have other shapes, such as circular or wheel shapes. In certain applications, the abrasive elements shown in FIG. 4 may also be employed for the arrangement in FIG. 5.

In embodiments of the invention, due to employment of the removal agent during electroerosion machining, the molten chips may be removed from cutting zone and out of the gap effectively. This may avoid and/or alleviate thermal impact on the workpiece so as to improve the machining quality. In some applications, the removal agent may be dispersed into the electrolyte so as to retrofit conventional electroerosion machining systems and increase system flexibility.

In other applications, the removal agent may be integrated with the electrode alternately and/or a plurality of separated electrodes may be employed to enhance removal of the molten chips out of the gap and alleviate thermal impact on the workpiece via alternating discharge. In certain application, the power supply may comprise the direct current (DC) pulse generator, which also may alleviate thermal impact on the workpiece via the alternating discharge. In particular examples, during the electroerosion machining of Ti-alloy, for the arrangements of the invention, the phase transition of Ti may be avoided and/or reduced, and the machining quality may be higher.

While the disclosure has been illustrated and described in typical embodiments, it is not intended to be limited to the details shown, since various modifications and substitutions can be made without departing in any way from the spirit of the present disclosure. As such, further modifications and equivalents of the disclosure herein disclosed may occur to persons skilled in the art using no more than routine experimentation, and all such modifications and equivalents are believed to be within the spirit and scope of the disclosure as defined by the following claims.

## Claims

1. An electroerosion machining system, comprising:
one or more electrodes configured to machine a workpiece;
a power supply configured to energize the workpiece and the respective one or more electrodes;
an electrolyte supply configured to pass an electrolyte between the workpiece and the respective one or more electrodes;
a working apparatus configured to move the respective one or more electrodes relative to the workpiece;
a controller configured to control the working apparatus to machine the workpiece; and
a removal agent configured to cooperate with the electrolyte from the electrolyte supply for removal of removed material from the workpiece.

2. The electroerosion machining system of claim 1, wherein the removal agent comprises one or more of aluminum oxide, carbides, nitrides, resins, diamond, garnet and nitrogen containing hydrocarbons.

3. The electroerosion machining system of claim 2, wherein the carbides comprise one or more of silicon carbide, tungsten carbide and boron carbide, the nitrides comprise cubic boron nitride, the resins comprise one or more of phenolic and polyimide, and the nitrogen containing hydrocarbons comprise amines.

4. The electroerosion machining system of any preceding claim, wherein the removal agent is dispersed into the electrolyte to pass between the workpiece and the respective one or more electrodes.

5. The electroerosion machining system of claim 4, further comprising a removal agent supply configured to provide the removal agent, and wherein the removal agent is in a form of solid particles.

6. The electroerosion machining system of claim 4, further comprising a nozzle configured to eject a mixture of the electrolyte and the removal agent to pass between the respective one or more electrodes and the workpiece.

7. The electroerosion machining system of any one of claims 1 to 3, wherein the removal agent is disposed on the respective one or more electrodes.

8. The electroerosion machining system of claim 7, wherein the removal agent comprises a plurality of abrasive elements, and wherein the abrasive elements disposed on the same one electrode are disposed alternately around and protrude beyond the one electrode.

9. The electroerosion machining system of any preceding claim, further comprising a base assembled onto the working apparatus and configured to hold the one or more electrodes, and wherein more than one of the one or more electrodes are disposed on the base alternately.

10. The electroerosion machining system of claim 9, wherein the base defines a plurality of slots to hold the respective more than one electrode, a central hole in fluid communication with the electrolyte supply and a plurality of channels in fluid communication with the central hole and the respective slots.

11. The electroerosion machining system of either of claim 9 or 10, where the base has a wheel shape.

12. The electroerosion machining system of claim 1, wherein the one or more electrodes comprise wheel shapes.

13. An electroerosion machining method, comprising:
driving one or more electrodes to move relative to a workpiece;
passing an electric current between the respective one or more electrodes and the workpiece while passing an electrolyte from an electrolyte supply through a gap defined therebetween; and
introducing a removal agent between the respective one or more electrodes and the workpiece to cooperate with the electrolyte for removal of removed material from the workpiece out of the gap.

14. The electroerosion machining method of claim 13, wherein the removal agent comprises a plurality of abrasive elements disposed on the respective one or more electrodes, and wherein the abrasive elements disposed on the same one electrode are disposed alternately around and protrude beyond the one electrode.

15. The electroerosion machining method of claim 13, wherein the one or more electrodes are held via a base, and wherein more than one of the one or more electrodes are disposed on the base alternately.
